# EUROPEAN PATENT APPLICATION

(11) **EP 4 787 577 A1**
(43) Date of publication of application: **05.08.2026**
(21) Application number: 24870046.0
(22) Date of filing: 23.07.2024
(51) Int. Cl.: H01M 50/244, H01M 50/204, H01M 50/271

(54) **SHELL ASSEMBLY, ENERGY STORAGE DEVICE AND ENERGY STORAGE SYSTEM**

(30) Priority: 28.09.2023 CN 202322669541 U
(71) Applicant: BYD Company Limited, Shenzhen, Guangdong 518118 (CN)
(72) Inventor: GAO, Yunjie, Shenzhen, Guangdong 518118 (CN); LI, Mingxing, Shenzhen, Guangdong 518118 (CN); XU, Guangdong, Shenzhen, Guangdong 518118 (CN)
(74) Representative: Mathys & Squire
(86) International application number: PCT/CN2024/107098
(87) International publication number: WO 2025/066491

(57) **Abstract**

This application discloses a housing assembly, an energy storage apparatus, and an energy storage system. The housing assembly defines an accommodation space, and the accommodation space is configured to accommodate a battery cell. The housing assembly includes: a first housing, where the first housing includes an inner wall of the first housing and an outer wall of the first housing disposed opposite to each other; and a first reinforcing structure. The first reinforcing structure is disposed on the outer wall of the first housing, the first reinforcing structure is configured to reinforce stiffness of the housing, the first reinforcing structure is provided with a wall-mounting structure, and the wall-mounting structure is configured to secure the energy storage apparatus to a wall surface via the wall-mounting structure.

## Description

This application claims priority to Chinese Patent Application No. 202322669541.0, filed with the China National Intellectual Property Administration on September 28, 2023 and entitled "HOUSING ASSEMBLY, ENERGY STORAGE APPARATUS, AND ENERGY STORAGE SYSTEM" which is incorporated herein by reference in its entirety.

### TECHNICAL FIELD

This application relates to the field of electrical technologies, and in particular, to a housing assembly, an energy storage apparatus, and an energy storage system.

### BACKGROUND

As the global energy structures undergo adjustment, new energy technologies are flourishing, and electrochemical energy storage systems are widely used on the power generation side, the transmission side, and the user side of a power grid, to implement functions of the power grid, such as peak shaving and valley filling, peak regulation and frequency regulation, voltage support, and line congestion relief.

At present, with battery energy density steadily increasing, energy storage devices are becoming smaller, thinner, and lighter. To implement a thinner and lighter design, current energy storage devices tend to reduce the thickness of the housing used to accommodate a battery cell.

However, because the thickness of the housing is relatively thin and stiffness of the housing is low, an inter-cell expansion force generated after the battery cell is charged causes deformation of the housing. As a result, the reliability of the energy storage device is poor.

### SUMMARY

This application provides a housing assembly, an energy storage apparatus, and an energy storage system, to improve reliability of an energy storage device.

According to a first aspect, this application discloses a housing assembly. The housing assembly defines an accommodation space, wherein the accommodation space is configured to accommodate a battery cell. The housing assembly includes: a first housing, the first housing including an inner wall of the first housing and an outer wall of the first housing disposed opposite to each other; and a first reinforcing structure, the first reinforcing structure being disposed on the outer wall of the first housing, the first reinforcing structure being configured to reinforce stiffness of the first housing, the first reinforcing structure being provided with a wall-mounting structure, and the wall-mounting structure being configured to secure an energy storage apparatus to a wall surface via the wall-mounting structure.

In a possible implementation, the wall-mounting structure includes a wall-mounting pin, a first end of the wall-mounting pin is detachably disposed in the first reinforcing structure, a second end of the wall-mounting pin is configured to be fastened to a suspension frame, and the suspension frame is fastened to a wall body; or, the wall-mounting structure includes a wall-mounting pin, a first end of the wall-mounting pin is detachably disposed in the first reinforcing structure, and a second end of the wall-mounting pin is configured to be fastened to a wall body.

In a possible implementation, the wall-mounting structure includes a wall-mounting protrusion, the wall-mounting protrusion and the first reinforcing structure are integrally formed, an end of the wall-mounting protrusion away from the first housing is configured to be fastened to a suspension frame, and the suspension frame is fastened to a wall body; or, an end of a wall-mounting protrusion away from the first housing is configured to be fastened to a wall body.

In a possible implementation, the first reinforcing structure includes a first reinforcing rib, wherein an extension direction of the first reinforcing rib is parallel to an arrangement direction of the battery cell.

In a possible implementation, the first reinforcing structure includes a second reinforcing rib, wherein the second reinforcing rib extends along a first direction, and the first direction represents a length direction of the first housing.

In a possible implementation, a plurality of second reinforcing ribs are disposed on the outer wall of the first housing; and in a second direction, a quantity of second reinforcing ribs disposed in a middle region of the first housing is greater than a quantity of second reinforcing ribs disposed in two side regions of the first housing, and the second direction is a width direction of the first housing.

In a possible implementation, the first reinforcing structure includes a third reinforcing rib, wherein the third reinforcing rib extends along the second direction, and the second direction represents a width direction of the first housing.

In a possible implementation, a plurality of third reinforcing ribs are disposed on the outer wall of the first housing; and in a first direction, a quantity of third reinforcing ribs disposed in a middle region of the first housing is greater than a quantity of third reinforcing ribs disposed in two side regions of the first housing, and the first direction is a length direction of the first housing.

In a possible implementation, the housing assembly further includes: a second housing, the second housing being configured to be snap-fitted to the first housing, the second housing including an inner wall of the second housing and an outer wall of the second housing disposed opposite to each other, the inner wall of the second housing and the inner wall of the first housing being configured to define the accommodation space, and the accommodation space being configured to accommodate the battery cell; and a second reinforcing structure, the second reinforcing structure being disposed on at least one of the inner wall of the second housing and the outer wall of the second housing, and the second reinforcing structure being configured to reinforce stiffness of the second housing.

In a possible implementation, the housing assembly further includes a sealing strip, and the sealing strip is disposed at a snap-fit joint between the second housing and the first housing.

In a possible implementation, the housing assembly further includes: a first end plate; and a second end plate, the first end plate and the second end plate being spaced apart along a first direction on the inner wall of the first housing, and the first end plate, the second end plate, the inner wall of the first housing, and the inner wall of the second housing being configured to define the accommodation space.

In a possible implementation, at least one of the first end plate and the second end plate is provided with a gripping member.

In a possible implementation, the housing assembly further includes a first side plate, the first side plate being disposed on a side of the inner wall of the first housing, a side edge of the first side plate being connected to the inner wall of the first housing, and the first side plate being connected to same-side end portions of the first end plate and the second end plate.

In a possible implementation, the first side plate is provided with a notch, and a projection of a pole of the battery cell in the first direction is located within a projection of the notch in the first direction.

In a possible implementation, the housing assembly further includes a second side plate and a third side plate, the second side plate and the third side plate being disposed on a side of the inner wall of the first housing, the second side plate and the third side plate being respectively connected to same-side end portions of the first end plate and the second end plate, and in the second direction, a gap being disposed between the second side plate and the third side plate.

In a possible implementation, a projection of a pole of the battery cell in the first direction is located within a projection of the gap in the first direction.

According to a second aspect, this application provides an energy storage apparatus. The energy storage apparatus includes a battery cell and a housing assembly, wherein the housing assembly includes the housing assembly according to the first aspect and any one of possible implementations of the first aspect.

According to a third aspect, this application provides an energy storage system. The energy storage system includes an energy storage apparatus and an electrical device, wherein energy storage apparatus is electrically connected to the electrical device, the energy storage apparatus is configured to supply power to the electrical device, and the energy storage apparatus includes the energy storage apparatus according to the second aspect and any one of possible implementations of the second aspect.

This application provides the housing assembly, the energy storage apparatus, and the energy storage system, wherein the housing assembly includes the first housing, the inner wall of a housing body of the first housing defines the accommodation space that is used to accommodate a part of the battery cell, the outer wall of the first housing is provided with the first reinforcing structure, and the first reinforcing structure can reinforce stiffness of the first housing, so that impact of an inter-cell expansion force on the first housing can be reduced, and reliability of the energy storage device can be improved.

The foregoing description is merely an overview of the technical solutions of this application. In order to understand the technical means of this application more clearly, the technical means of this application may be implemented according to the content of this specification. In addition, to make the foregoing and other objectives, features, and advantages of this application more clearly and easily understood, the following specifically exemplifies specific implementations of this application.

### BRIEF DESCRIPTION OF DRAWINGS

To describe technical solutions in embodiments or the related technology of this application more clearly, the following briefly introduces accompanying drawings required for describing the embodiments or the related technology. Clearly, the accompanying drawings in the following description show some embodiments of this application, and a person of ordinary skill in the art may still derive other drawings from these accompanying drawings without creative efforts.
FIG. 1 is a schematic diagram of an embodiment of an energy storage apparatus according to an embodiment of this application;
FIG. 2 is a schematic diagram of another embodiment of an energy storage apparatus according to an embodiment of this application;
FIG. 3 is a schematic diagram of another embodiment of an energy storage apparatus according to an embodiment of this application;
FIG. 4 is a schematic diagram of another embodiment of an energy storage apparatus according to an embodiment of this application; and
FIG. 5 is a schematic diagram of another embodiment of an energy storage apparatus according to an embodiment of this application.

Reference numerals:
1: battery cell;
2: housing assembly; 21: first housing; 22: first reinforcing structure; 23: wall-mounting structure; 24: first end plate; 25: second end plate; 26: reinforcing plate; 27: second housing; 28: retaining wall; 29: second reinforcing structure;
3: fastening frame;
4: decorative cover;
6: insulation frame;
7: electrical connection sheet;
8: soldering position;
9: gripping member.

### DESCRIPTION OF EMBODIMENTS

To make objectives, technical solutions, and advantages of embodiments of this application clearer, the following clearly and completely describes the technical solutions in embodiments of this application with reference to the accompanying drawings in embodiments of this application. It is clear that the described embodiments are some but not all of embodiments of this application. All other embodiments obtained by those skilled in the art based on embodiments of this application without creative efforts shall fall within the protection scope of this application.

The following describes in detail a housing assembly, an energy storage apparatus, and an energy storage system provided in this application with reference to accompanying drawings.

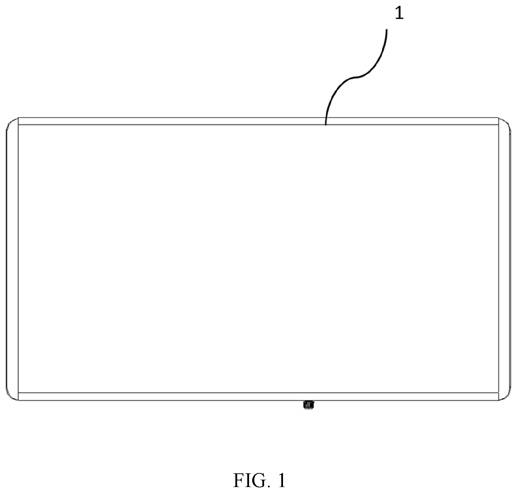

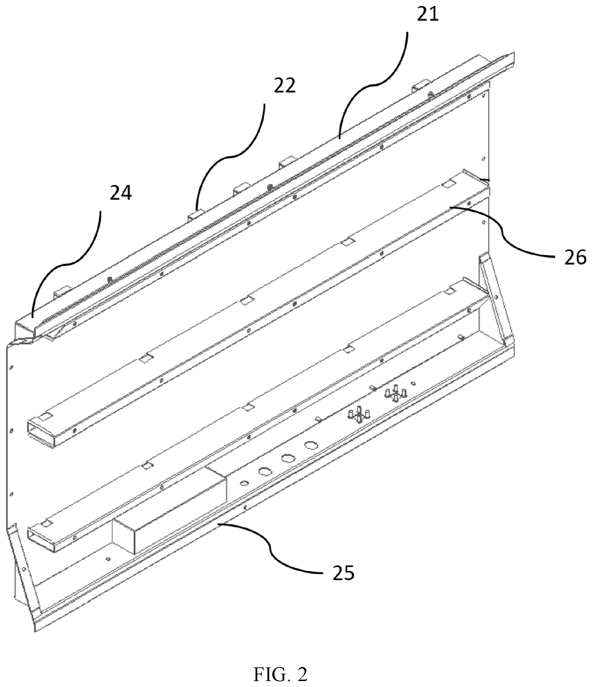

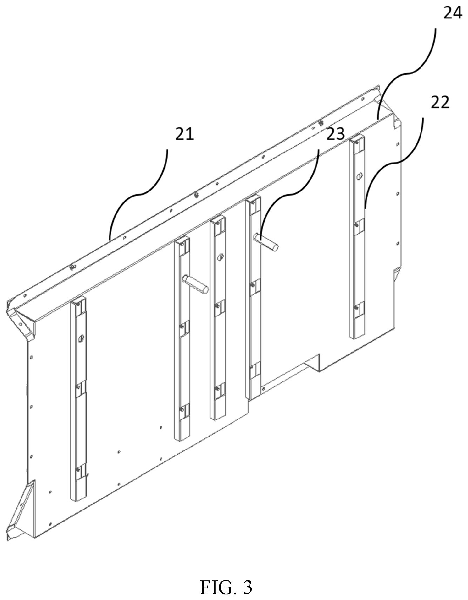

Refer to FIG. 1 to FIG. 5. A housing assembly 2 provided in an embodiment of this application is first described. The housing assembly 2 means a housing in an energy storage apparatus. The housing assembly 2 defines an accommodation space, and the accommodation space is configured to accommodate a battery cell 1. The housing assembly 2 includes a first housing 21. The first housing 21 includes an inner wall of the first housing 21 and an outer wall of the first housing 21 disposed opposite to each other, and a first reinforcing structure 22. The first reinforcing structure 22 is disposed on the outer wall of the first housing 21, and the first reinforcing structure 22 is configured to reinforce stiffness of the first housing 21. The first reinforcing structure 22 is provided with a wall-mounting structure 23, and the wall-mounting structure 23 is configured to secure the energy storage apparatus to a wall surface via the wall-mounting structure 23.

In this embodiment, a shape of the housing assembly 2 may be a cube, a shape of the housing assembly 2 may be a cuboid, or a shape of the housing assembly 2 may be another shape. This may be set by a person skilled in the art according to an actual requirement. For example, the shape of the housing assembly 2 is a cylinder, an elliptical cylinder, or the like. This is not specifically limited herein.

For example, if the shape of the housing assembly 2 is a cuboid, the battery cell 1 is disposed in the housing assembly 2, to protect the battery cell 1 via the housing assembly 2. The housing assembly 2 includes the first housing 21 and the first reinforcing structure 22. The battery cell 1 is partially accommodated in the accommodation space that is formed by the inner wall of the first housing 21, and the inner wall of the first housing 21 is a surface, close to the battery cell 1, of the first housing 21.

In this embodiment of this application, the first reinforcing structure 22 can enhance a supporting force of the first housing 21, so that deformation of the first housing 21 caused by an excessive weight of the battery cell 1 accommodated in the first housing 21 is avoided, and an overall shape of the housing assembly 2 and connection stability are prevented from being affected. In addition, the first reinforcing structure 22 can further improve strength of the first housing 21, and the first reinforcing structure 22 can reinforce stiffness of the first housing 21, so that impact of an inter-cell expansion force on the first housing 21 can be reduced, and reliability of the energy storage apparatus can be improved.

In this embodiment of this application, because the first reinforcing structure 22 is disposed on the outer wall of the first housing 21, the accommodation space defined by the inner wall of the first housing 21 cannot be occupied. Therefore, space, used to accommodate the battery cell, in the accommodation space is increased, so that space utilization of the accommodation space is improved, and energy density of an energy storage product is improved. In addition, a size, accommodating the battery cell 1, of the first housing 21 can be smaller, and a corresponding energy storage apparatus can be lighter and thinner.

Optionally, in this embodiment of this application, the first reinforcing structure 22 may be detachably disposed on the first housing 21, or the first reinforcing structure 22 and the first housing 21 may be integrally formed. This is not specifically limited herein.

In this embodiment, the first reinforcing structure 22 is further provided with a wall-mounting structure 23. The wall-mounting structure 23 is used to fasten the first housing 21 to a wall surface. A form of the wall-mounting structure 23 is not limited in this application. The following describes the wall-mounting structure 23 by using an example.

In this embodiment, optionally, the wall-mounting structure 23 may be a wall-mounting pin, a first end of the wall-mounting pin is detachably disposed in the first reinforcing structure 22, a second end of the wall-mounting pin may be fastened to a suspension frame, and the suspension frame may be fastened to a wall body.

In this embodiment, optionally, the wall-mounting structure 23 may be a wall-mounting pin, a first end of the wall-mounting pin is detachably disposed in the first reinforcing structure 22, and a second end of the wall-mounting pin may be alternatively directly fastened to a wall body.

In this embodiment, optionally, the wall-mounting structure 23 may be a wall-mounting protrusion, the wall-mounting protrusion and the first reinforcing structure 22 are integrally formed, an end of the wall-mounting protrusion away from the first housing 21 may be fastened to a suspension frame, and the suspension frame is fastened to a wall body.

In this embodiment, optionally, the wall-mounting structure 23 may be a wall-mounting protrusion, the wall-mounting protrusion and the first reinforcing structure 22 are integrally formed, and an end of the wall-mounting protrusion away from the first housing 21 may be alternatively fastened to a wall body.

Optionally, in this embodiment of this application, the wall-mounting structure 23 may be other types of wall-mounting structures other than the wall-mounting pin and the wall-mounting protrusion. This is not specifically limited herein.

Because the first reinforcing structure 22 and the wall-mounting structure 23 are both disposed on a side of the outer wall of the first housing 21, two components share space on an outer side of the first housing 21, so that waste of space is reduced and space utilization is improved.

In this embodiment of this application, compared with disposing the wall-mounting structure 23 on the first housing 21, disposing the wall-mounting structure 23 on the first reinforcing structure 22 can reduce a quantity of parts, reduce costs, and reduce assembly processes.

In this embodiment of this application, optionally, there are a plurality of implementations of the first reinforcing structure 22. For example, the first reinforcing structure 22 may be a reinforcing rib, the first reinforcing structure 22 may be a reinforcing rib plate, or the first reinforcing structure 22 may be other types of reinforcing members. This is not specifically limited herein.

For example, if the implementation of the first reinforcing structure 22 is the first reinforcing rib, to more effectively reduce impact of an expansion force of the battery cell on the housing, an extension direction of the first reinforcing structure 22 may be in parallel to an arrangement direction of the battery cell 1.

In this application, in the energy storage apparatus, the arrangement direction of the battery cell 1 is usually in parallel to a width direction of the first housing 21, or the arrangement direction of the battery cell 1 is in parallel to a length direction of the first housing 21.

It will be understood that, if a plurality of battery cells 1 are arranged in the length direction of the first housing 21, a second reinforcing rib may be disposed on an outer surface of the first housing 21, and the second reinforcing rib extends along the length direction of the first housing 21. Usually, a middle position of the first housing 21 is prone to deformation caused by bearing an excessive weight. It can be learned from simulation results that an expansion force of the battery cell 1 has relatively large impact on a middle region of the first housing 21. Therefore, optionally, in the width direction, the second reinforcing rib may be separately disposed in the middle region of the first housing 21 and two side regions of the first housing 21, and a quantity of second reinforcing ribs in the middle region of the first housing 21 is greater than a quantity of second reinforcing ribs in the two side regions of the first housing 21.

For example, three second reinforcing ribs are disposed in the middle region of the first housing 21, and one second reinforcing rib is disposed in each of the two side regions of the first housing 21. In this way, the structural strength of the middle region of the first housing 21 can be effectively improved. In addition, the second reinforcing ribs not being distributed evenly can reduce a weight. In this embodiment of this application, the second reinforcing rib may be alternatively disposed in other manners on the first housing 21. This is not specifically limited herein.

It will be understood that, if the plurality of battery cells 1 are arranged in the width direction of the first housing 21, a third reinforcing rib may be disposed on the outer surface of the first housing 21, and the third reinforcing rib extends along the width direction of the first housing 21. Usually, a middle position of the first housing 21 is prone to deformation caused by bearing an excessive weight. It can be learned from simulation results that the expansion force of the battery cell 1 has relatively large impact on the middle region of the first housing 21. Therefore, optionally, in the length direction, the third reinforcing rib may be separately disposed in the middle region of the first housing 21 and the two side regions of the first housing 21, and a quantity of third reinforcing ribs in the middle region of the first housing 21 is greater than a quantity of third reinforcing ribs in the two side regions of the first housing 21.

For example, three third reinforcing ribs are disposed in the middle region of the first housing 21, and one third reinforcing rib is disposed in each of the two side regions of the first housing 21. In this way, the structural strength of the middle region of the first housing 21 can be effectively improved. In addition, the third reinforcing ribs not being distributed evenly can reduce a weight. In this embodiment of this application, the third reinforcing rib may be alternatively disposed in other manners on the first housing 21. This is not specifically limited herein.

Optionally, to further prevent deformation of the first housing 21 and reinforce stiffness of the first housing 21, the second reinforcing rib and the third reinforcing rib may be both disposed on the first housing 21. This is not specifically limited herein, and may be selected by a person skilled in the art according to an actual requirement.

In this embodiment of this application, optionally, the housing assembly 2 may further include a second housing 27. The second housing 27 is snap-fitted to the first housing 21. The second housing 27 includes an inner wall of the second housing 27 and an outer wall of the second housing 27 disposed opposite to each other, the inner wall of the second housing 27 and the inner wall of the first housing 21 are used to define the accommodation space, and the accommodation space may be used to accommodate the battery cell 1. In addition, to reinforce stiffness of the second housing 27, a second reinforcing structure 29 may be further disposed on the second housing 27. The second reinforcing structure 29 may be disposed on the inner wall of the second housing 27, or may be disposed on the outer wall of the second housing 27. Alternatively, the second reinforcing structure 29 may be disposed on the inner wall of the second housing 27 and the outer wall of the second housing 27. This is not specifically limited herein.

In this embodiment of this application, a disposing manner of the second reinforcing structure 29 is similar to the foregoing disposing manner of the first reinforcing structure 22. Details are not described herein again.

In this embodiment of this application, materials of the first reinforcing structure 22 and the second reinforcing structure 29 may be metal. Alternatively, materials of the first reinforcing structure 22 and the second reinforcing structure 29 may be plastic. Alternatively, materials of the first reinforcing structure 22 and the second reinforcing structure 29 may be ceramic, or may be another material. Alternatively, materials of the first reinforcing structure 22 and the second reinforcing structure 29 may be different. This is not specifically limited herein.

In this embodiment of this application, the energy storage apparatus can be designed to be waterproof. Optionally, a sealing strip may be disposed at a snap-fit joint between the second housing 27 and the first housing 21, or a sealant may be disposed at a snap-fit joint between the first housing 21 and the second housing 27. The battery cell 1 is disposed in the accommodation space formed after the first housing 21 and the second housing 27 are snap-fitted, to implement waterproofing.

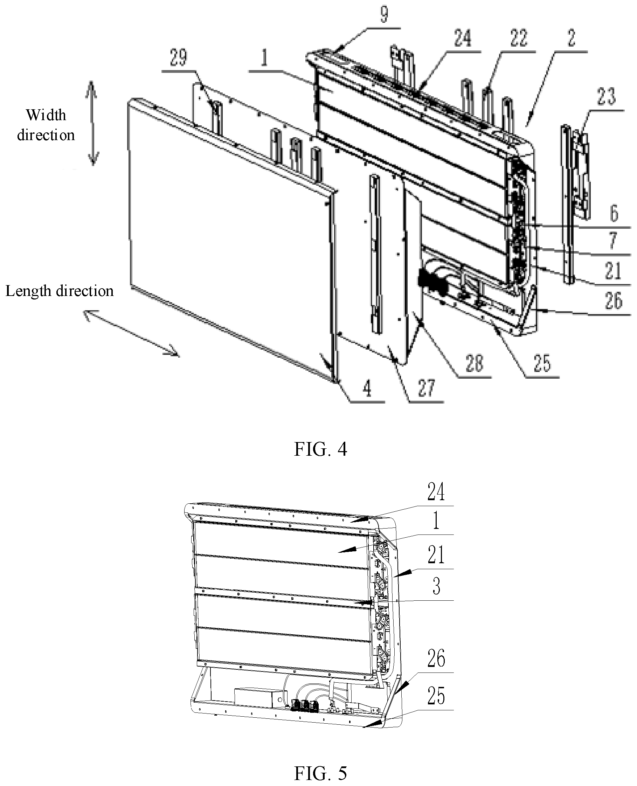

As shown in FIG. 5, the sealing strip is disposed at side edges of the second housing 27 and the first housing 21. For example, by connecting the first housing 21 to the second housing 27 together via a bolt, the sealing strip is pressed between the first housing 21 and the second housing 27. A waterproof function of the housing assembly 2 is implemented by controlling a compression amount of the sealing strip, to prevent impurities such as water and dust from entering the housing assembly 2 through a gap between the second housing 27 and the first housing 21, thereby damaging the battery cell 1. By disposing the sealing strip, the interior of the housing assembly 2 is effectively kept clean, thereby prolonging a service life of the energy storage apparatus.

In this embodiment of this application, optionally, the housing assembly 2 may further include a first end plate 24 and a second end plate 25. The first end plate 24 and the second end plate 25 are spaced apart along a second direction on the inner wall of the first housing 21. The first end plate 24, the second end plate 25, the inner wall of the first housing 21, and the inner wall of the second housing 27 are configured to define the accommodation space.

Optionally, in a possible implementation, the housing assembly 1 may further include a first side plate. The first side plate is disposed on a side of the inner wall of the first housing 21, a side edge of the first side plate is connected to the inner wall of the first housing 21, and the first side plate is connected to same-side end portions of the first end plate 24 and the second end plate 25. In this embodiment, the first housing 21, the second housing 27, the first end plate 24, the second end plate 25, and the first side plate jointly define the accommodation space, and the battery cell is accommodated in the accommodation space.

The first end plate 24 and the second end plate 25 are fastened to the inner wall of the first housing 21. Materials of the first end plate 24 and the second end plate 25 are any one or more of metal, plastic, ceramic, wood, and the like. The first end plate 24 and the second end plate 25 are fastened to the inner wall of the first housing 21 by soldering, bonding, riveting, clamping, or the like, to form the accommodation space between the first end plate 24 and the second end plate 25. The first end plate 24 and the second end plate 25 can effectively improve structural strength of the first housing 21.

Optionally, materials of the first housing 21, the first end plate 24, and the second end plate 25 are all metal materials, and the first housing 21, the first end plate 24, and the second end plate 25 are integrally formed through sheet metal processing. In this manner, steps of connecting the first housing 21, the first end plate 24, and the second end plate 25 are saved, and compared with other connection manners, integral molding can more effectively improve connection strength and structural strength of the first end plate 24, the second end plate 25, and the first housing 21.

In addition, a material of the first side plate may be metal, plastic, ceramic, wood, or the like. The first side plate is fastened to the inner wall of the first housing 21 and/or is connected to the first end plate 24 and the second end plate 25 by soldering, bonding, riveting, clamping, or the like. For example, a plurality of first side plates are disposed at two ends of the first housing 21 in the first direction. The plurality of first side plates each are connected to the first end plate 24 and the second end plate 25. Reinforcing the connection between the first housing 21, the first end plate 24, and the second end plate 25 via the first side plate can effectively improve overall structural strength of the first housing 21, the first end plate 24, and the second end plate 25.

In this embodiment, optionally, the first side plate is provided with a notch, and a projection of a pole of the battery cell 1 in the first direction is located within a projection of the notch in the first direction.

Optionally, in a possible implementation, the housing assembly 1 may further include a second side plate and a third side plate. The second side plate and the third side plate are disposed on the side of the inner wall of the first housing 21, the second side plate and the third side plate are respectively connected to the same-side end portions of the first end plate 24 and the second end plate 25, and in the second direction, a gap is disposed between the second side plate and the third side plate.

In this embodiment, optionally, the projection of the pole of the battery cell 1 in the first direction is located within a projection of the gap in the first direction.

In this embodiment, a bevel edge of a reinforcing plate 26 of the first end plate 24, a part of the first housing 21, and a bevel edge of a reinforcing plate 26 of the second end plate 25 define a gap space, and the gap space is of a trapezoidal structure having an opening at an end. The gap space is used to solder the pole of the battery cell 1. The gap space is disposed on a side surface of the energy storage apparatus, to facilitate mounting and maintenance of the battery cell 1.

A top of the second housing 27 is connected to the first end plate 24. A bottom of the second housing 27 is connected to the second end plate 25. A retaining wall 28 is embedded in accommodation space having a trapezoidal structure. The second housing 27, the first end plate 24, the first housing 21, the second end plate 25, the retaining wall 28, and the reinforcing plate 26 form a cuboid. That is, the housing assembly 2 as a whole is a cuboid.

By disposing the second housing 27 and the first housing 21, the battery cell 1 is easy to mount. The second housing 27 and the first housing 21 can effectively protect the battery cell 1.

Certainly, the housing assembly 2 in this embodiment of this application is not limited to the foregoing structure, and may be set by a person skilled in the art according to an actual requirement.

Optionally, the housing assembly 2 further includes a decorative cover 4. The second reinforcing structure 29 is disposed at a wall portion, away from the first housing 21, of the second housing 27. The decorative cover 4 covers the second reinforcing structure 29 on the outside, and is fastened to the second housing 27.

As shown in FIG. 1, the top of the second housing 27 is connected to the first end plate 24. The bottom of the second housing 27 is connected to the second end plate 24. The second housing 27, the first end plate 23, the first housing 21, the second end plate 24, the reinforcing plate 26, and the retaining wall 28 define, in an enclosing manner, the housing assembly 2. The battery cell 1 is disposed in the housing assembly 2, to protect the battery cell 1 via the housing assembly 2.

The second reinforcing structure 29 is disposed on the outer wall of the second housing 27 via a screw, and the second reinforcing structure 29 is opposite to the battery cell 1, to improve structural strength of the second housing 27 via the second reinforcing structure 29. The second housing 27 is fitted with the first housing 21, to form the housing assembly 2, thereby fastening the battery cell 1 located in the housing assembly 2. Because the second reinforcing structure 29 is located on the outer wall of the second housing 27, waste of the accommodation space can be avoided, so that a capacity of the energy storage apparatus is improved, and utilization of the accommodation space is effectively improved. The decorative cover 4 is fastened to the outer wall of the second housing 27 and covers the second reinforcing structure 29 on the outside, so that aesthetics of the energy storage apparatus can be improved.

As shown in FIG. 1 to FIG. 5, the bevel edge of the reinforcing plate 26 of the first end plate 24, a part of the first housing 21, and the bevel edge of the reinforcing plate 26 of the second end plate 25 define a gap space, and the gap space is of a trapezoidal structure having an opening at an end. The gap space is used to solder the pole of the battery cell 1. The gap space is disposed on the side surface of the energy storage apparatus, to facilitate mounting and maintenance of the battery cell 1.

In this embodiment of this application, it will be understood that the end portion may mean an edge of a plate. Alternatively, the end portion may mean a location near an edge. This is not specifically limited herein.

Optionally, the housing assembly may further include a fastening frame 3. The fastening frame 3 is disposed on the side of the inner wall of the first housing 21, and extends along a direction away from the inner wall of the first housing 21. The fastening frame 3 is configured to carry the battery cell 1.

In this example, the fastening frame 3 is of a frame structure. There is one or more fastening frames 3. The battery cell 1 is directly or indirectly mounted on the fastening frame 3. The battery cell 1 is easy to mount via the fastening frame 3.

In addition, the battery cell 1 is indirectly fastened to the first housing 21 via the fastening frame 3. The fastening frame 3 is fastened to the first housing 21, so that the fastening frame 3 can also improve the carrying capacity of the first housing 21.

Optionally, a limiting structure is disposed at each of two ends of the fastening frame 3, and the limiting structure is configured to position the battery cell 1.

For example, the limiting structure is a protrusion, a groove, or the like used to position the battery cell 1. The limiting structure can effectively position the battery cell 1, thereby preventing the battery cell from moving on the fastening frame 3.

Further, the limiting structure is limiting protrusions formed by folded edges at the two ends of the fastening frame 3.

For example, the fastening frame 3 includes a metal sheet. Two ends of the metal sheet are folded to form the limiting protrusions. In this manner, the limiting protrusions are easy to manufacture, and steps of connecting the limiting structure to the fastening frame 3 are saved. During mounting, the battery cell 1 is fastened to the fastening frame 3 and located between the two limiting protrusions.

Heights of the limiting protrusions are not limited herein, and may be set by a person skilled in the art according to an actual requirement.

Optionally, the fastening frame 3 extends along the length direction of the first housing 21 and is fastened to the inner wall of the first housing 21, enabling the battery cell 1 to be disposed along the length direction on the inner wall of the first housing 21. The first reinforcing structure 22 extends along the width direction and is fastened to the outer wall of the first housing 21. In this example, the first reinforcing structure 22 and the fastening frame 3 are orthogonally disposed. Compared to a disposing manner in which the extension direction of the first reinforcing structure 22 is parallel to an extension direction of the fastening frame 3, this manner can effectively improve structural strength of the first housing 21 in different directions. The limiting protrusion on the fastening frame 3 can define a position of the battery cell 1, to prevent damage to the energy storage apparatus caused by shaking of the battery cell 1 during mounting or use.

Certainly, in this embodiment of this application, the fastening frame 3 and the first reinforcing structure 22 are not limited to being orthogonally disposed, and may intersect at any angle. A person skilled in the art may select, according to an actual requirement, an included angle at which the fastening frame 3 and the first reinforcing structure 22 intersect.

In this application, optionally, to facilitate transportation or movement of the energy storage device, at least one of the first end plate 24 and the second end plate 25 is provided with a gripping member 9, so that related personnel can conveniently move the energy storage device.

As shown in FIG. 1, the gripping member 9 is disposed at each of two ends of the first end plate 24. The gripping member 9 is disposed at each of two ends of the second end plate 25. For example, the gripping member is a strip-shaped through hole that is provided on each of the first end plate 24 and the second end plate 25. When a wall-mounting operation is performed, a hand of an operator can pass through the strip-shaped through hole, thereby effectively gripping the energy storage apparatus. The wall-mounting operation can be easily performed on the energy storage apparatus via the gripping member 9.

Certainly, the gripping member 9 is not limited to the foregoing embodiment, and may be set by a person skilled in the art according to an actual requirement.

Optionally, an insulation frame 6 is fastened to the inner wall of the first housing 21, an electrical connection sheet 7 is fastened to the insulation frame 6, and a soldering position 8 is disposed at a position, corresponding to an electrode of the battery cell 1, of the electrical connection sheet 7.

As shown in FIG. 1 and FIG. 4, the insulation frame 6 is disposed on the inner wall of the first housing 21 by bolting, clamping, riveting, or the like. A material of the insulation frame 6 is plastic, rubber, silica gel, ceramic, or the like. The electrical connection sheet 7 is disposed on the insulation frame 6 by bolting, riveting, clamping, or the like. The electrical connection sheet 7 is used to connect to an output cable or an input cable of the battery cell 1, to implement a charging function and a discharging function of the battery cell 1. The insulation frame 6 can be used to place the electrical connection sheet 7, and can be further used to route cables. The cables are routed on the insulation frame 6, so that the overall appearance of the energy storage apparatus is simpler and aesthetics is improved.

For example, a total negative cable of the battery cell 1 is connected to a battery management system via one electrical connection sheet 7, and a total positive cable of the battery cell 1 is connected to an external output port via another electrical connection sheet 7, to implement the charging function and the discharging function of the battery cell 1. Each battery cell 1 is connected to a voltage sampling cable, and the voltage sampling cable is connected to the battery management system. A communication cable is connected to the battery management system. The communication cable is connected to an external communication port, enabling the energy storage apparatus to communicate with an external device.

Certainly, the housing assembly 2 in this embodiment of this application is not limited to the foregoing structure, and may be set by a person skilled in the art according to an actual requirement.

This application further provides an energy storage apparatus. The energy storage apparatus includes a battery cell 1 and a housing assembly 2. The housing assembly 2 is the housing assembly 2 described in any one of the foregoing embodiments.

In addition, this application further provides an energy storage system. The energy storage system includes an energy storage apparatus and an electrical device. The energy storage apparatus is electrically connected to the electrical device, and the energy storage apparatus is configured to supply power to the electrical device. The energy storage apparatus includes the energy storage apparatus described in any one of the foregoing embodiments.

The foregoing described apparatus embodiment is merely an example. Units described as separate components may or may not be physically separate, and components displayed as units may or may not be physical units, which may be located in one place, or may be distributed on a plurality of network units. Some or all of the units may be selected according to actual requirements to implement the objectives of the solutions in this embodiment. Those of ordinary skill in the art can understand and implement the embodiments without creative efforts.

The term "one embodiment", "embodiment" or "one or more embodiments" mentioned herein means that a specific feature, structure, or characteristic described in combination with the embodiment is included at least one embodiment of this application. In addition, it should be noted that the phrase example "in an embodiment" herein does not necessarily refer to the same embodiment. Many specific details are set forth in this specification. However, it is understood that embodiments of this application may be practiced without these specific details. In some instances, well-known methods, structures and techniques have not been shown in detail, in order not to obscure understanding of this specification.

In the claims, any reference sign placed between parentheses shall not be construed as limitation on the claims. The word "comprising" does not exclude the presence of elements or steps not listed in the claims. The word "a" or "an" preceding the element does not exclude the presence of a plurality of such elements. This application may be implemented by hardware including several different elements, and by a suitably programmed computer. In the unit claim enumerating several apparatuses, some of these apparatuses may be embodied by a same hardware item. The usage of the words first, second, third, or the like does not indicate any order. These words may be interpreted as names.

Finally, it should be noted that the foregoing embodiments are merely used to explain the technical solutions of this application, but are not intended to limit the same. Although this application is described in detail with reference to the foregoing embodiments, those of ordinary skill in the art should understand that they can still modify the technical solutions described in the foregoing embodiments, or make equivalent substitutions on some technical features therein. These modifications or substitutions do not make the essence of the corresponding technical solutions deviate from the spirit and scope of the technical solutions of the embodiments of this application.

## Claims

1. A housing assembly, the housing assembly (2) defining an accommodation space, wherein the accommodation space is configured to accommodate a battery cell (1), the housing assembly (2) comprising:
a first housing (21), the first housing (21) comprising an inner wall of the first housing (21) and an outer wall of the first housing (21) disposed opposite to each other; and
a first reinforcing structure (22), the first reinforcing structure (22) being disposed on the outer wall of the first housing (21), the first reinforcing structure (22) being configured to reinforce stiffness of the first housing (21), the first reinforcing structure (22) being provided with a wall-mounting structure (23), and the wall-mounting structure (23) being configured to secure an energy storage apparatus to a wall surface via the wall-mounting structure (23).

2. The housing assembly according to claim 1, wherein the wall-mounting structure (23) comprises a wall-mounting pin, a first end of the wall-mounting pin is detachably disposed in the first reinforcing structure (22), a second end of the wall-mounting pin is configured to be fastened to a suspension frame, and the suspension frame is fastened to a wall body; or
the wall-mounting structure (23) comprises a wall-mounting pin, a first end of the wall-mounting pin is detachably disposed in the first reinforcing structure (22), and a second end of the wall-mounting pin is configured to be fastened to a wall body.

3. The housing assembly according to claim 1, wherein the wall-mounting structure (23) comprises a wall-mounting protrusion, the wall-mounting protrusion and the first reinforcing structure (22) are integrally formed, an end of the wall-mounting protrusion away from the first housing (21) is configured to be fastened to a suspension frame, and the suspension frame is fastened to a wall body; or
an end of a wall-mounting protrusion away from the first housing (21) is configured to be fastened to a wall body.

4. The housing assembly according to claim 1, wherein the first reinforcing structure (22) comprises:
a first reinforcing rib, wherein an extension direction of the first reinforcing rib is parallel to an arrangement direction of the battery cell (1).

5. The housing assembly according to any one of claims 1 to 4, wherein the first reinforcing structure (22) comprises:
a second reinforcing rib, wherein the second reinforcing rib extends along a first direction, and the first direction represents a length direction of the first housing (21).

6. The housing assembly according to claim 5, wherein a plurality of second reinforcing ribs are disposed on the outer wall of the first housing (21); and
in a second direction, a quantity of second reinforcing ribs disposed in a middle region of the first housing (21) is greater than a quantity of second reinforcing ribs disposed in two side regions of the first housing (21), and the second direction is a width direction of the first housing (21).

7. The housing assembly according to any one of claims 1 to 4, wherein the first reinforcing structure (22) comprises:
a third reinforcing rib, wherein the third reinforcing rib extends along a second direction, and the second direction represents a width direction of the first housing (21).

8. The housing assembly according to claim 7, wherein a plurality of third reinforcing ribs are disposed on the outer wall of the first housing (21); and
in a first direction, a quantity of third reinforcing ribs disposed in a middle region of the first housing (21) is greater than a quantity of third reinforcing ribs disposed in two side regions of the first housing (21), and the first direction is a length direction of the first housing (21).

9. The housing assembly according to any one of claims 1 to 4, the housing assembly (2) further comprising:
a second housing (27), the second housing (27) being configured to be snap-fitted to the first housing (21), the second housing (27) comprising an inner wall of the second housing (27) and an outer wall of the second housing (27) disposed opposite to each other, the inner wall of the second housing (27) and the inner wall of the first housing (21) being configured to define the accommodation space, and the accommodation space being configured to accommodate the battery cell (1); and
a second reinforcing structure (29), the second reinforcing structure (29) being disposed on at least one of the inner wall of the second housing (27) and the outer wall of the second housing (27), and the second reinforcing structure (29) being configured to reinforce stiffness of the second housing (27).

10. The housing assembly according to claim 9, the housing assembly (2) further comprising a sealing strip, and the sealing strip being disposed at a snap-fit joint between the second housing (27) and the first housing (21).

11. The housing assembly according to claim 9, the housing assembly (2) further comprising:
a first end plate (24); and
a second end plate (25), the first end plate (24) and the second end plate (25) being spaced apart along a first direction on the inner wall of the first housing (21), and the first end plate (24), the second end plate (25), the inner wall of the first housing (21), and the inner wall of the second housing (27) being configured to define the accommodation space.

12. The housing assembly according to claim 11, wherein at least one of the first end plate (24) and the second end plate (25) is provided with a gripping member (9).

13. The housing assembly according to claim 11, the housing assembly (2) further comprising:
a first side plate, the first side plate being disposed on a side of the inner wall of the first housing (21), a side edge of the first side plate being connected to the inner wall of the first housing (21), and the first side plate being connected to same-side end portions of the first end plate (24) and the second end plate (25).

14. The housing assembly according to claim 13, wherein the first side plate is provided with a notch, and a projection of a pole of the battery cell (1) in the first direction is located within a projection of the notch in the first direction.

15. The housing assembly according to claim 11, the housing assembly (2) further comprising:
a second side plate and a third side plate, the second side plate and the third side plate being disposed on a side of the inner wall of the first housing (21), the second side plate and the third side plate being respectively connected to same-side end portions of the first end plate (24) and the second end plate (25), and in a second direction, a gap being disposed between the second side plate and the third side plate.

16. The housing assembly according to claim 15, wherein a projection of a pole of the battery cell (1) in the first direction is located within a projection of the gap in the first direction.

17. An energy storage apparatus, the energy storage apparatus comprising a battery cell (1) and a housing assembly (2), wherein the housing assembly (2) comprises the housing assembly according to any one of claims 1 to 16.

18. An energy storage system, the energy storage system comprising an energy storage apparatus and an electrical device, wherein the energy storage apparatus is electrically connected to the electrical device, the energy storage apparatus is configured to supply power to the electrical device, and the energy storage apparatus comprises the energy storage apparatus according to claim 16.
